# EUROPEAN PATENT SPECIFICATION

(11) **EP 3 032 149 B1**
(45) Date of publication and mention of the grant of the patent: **21.02.2018**
(21) Application number: 15199483.7
(22) Date of filing: 11.12.2015
(51) Int. Cl.: F16J 15/44

(54) **SEALING DEVICE, ROTATING MACHINE, AND METHOD FOR MANUFACTURING SEALING DEVICE**
ABDICHTUNGSVORRICHTUNG, DREHMASCHINE UND VERFAHREN ZUR HERSTELLUNG DER ABDICHTUNGSVORRICHTUNG
DISPOSITIF D'ÉTANCHÉITÉ, MACHINE ROTATIVE ET PROCÉDÉ DE FABRICATION D'UN DISPOSITIF D'ÉTANCHÉITÉ

(30) Priority: 12.12.2014 JP 2014252181
(43) Date of publication of application: 15.06.2016
(73) Proprietor: Mitsubishi Hitachi Power Systems, Ltd., Yokohama 220-8401 (JP)
(72) Inventor: MIZUMI, Shunsuke, Yokohama, 220-8401 (JP); KUDO, Takeshi, Yokohama, 220-8401 (JP); OGATA, Koji, Yokohama, 220-8401 (JP); OIKAWA, Shinji, Yokohama, 220-8401 (JP)
(74) Representative: MERH-IP Matias Erny Reichl Hoffmann Patentanwälte PartG mbB

(56) References cited:
- US-A- 5 971 400

## Description

### BACKGROUND OF THE INVENTION

### 1. Field of the Invention

The present invention relates to a sealing device, a rotating machine, and a method for manufacturing a sealing device.

### 2. Description of Related Art

A large rotating machine, such as a steam turbine or a gas turbine, generally has a casing surrounding a rotor disposed inside the rotating machine so as to enclose the rotor and to thus hermetically seal a working fluid. The casing, when manufactured, typically includes an upper half and a lower half that are brought together into one assembly to sandwich the rotor. The flange faces of the upper half and the lower half partly protrude. Bolts, passing through and tightening the flange faces, ensure the air tightness of the casings.

Such a rotating machine has a clearance between the rotor and a stator. The working fluid that may leak from the clearance could lead to energy loss, and for this reason, the rotating machine typically includes a sealing mechanism for minimizing this leakage. The sealing mechanism, when assembled, is of a ring shape but has assembled segments that are originally divided into two or four segments, as with the casing.

The sealing mechanism, however, differs from the casing in that the sealing mechanism needs to have not only a leakage prevention function, but also a function of avoiding unnecessary damage by moving diametrically in case of rubbing with the rotor. It is thus general practice to assemble the segments of the sealing mechanism by joining their smooth flange faces together, instead of fastening the segments using, for example, bolts.

The sealing mechanism, because of its use with a working fluid at high temperature during its operation, undergoes considerable thermal deformation that is different from during manufacturing and assembling of the sealing mechanism. To avoid unnecessary clearance at the flange faces, each individual segment needs to be machined to a dimension that incorporates the deformation. It is, however, extremely difficult to accurately estimate a thermal distribution during the operation and to manufacture each sealing ring that is assembled from separate segments machined to the dimension obtained from the estimated value. Thus in practice, design requirements of the seal mechanism allow for dimensional tolerances to some degree. A clearance therefore is present in the joint of actual adjacent segments and energy loss is considered to occur due to leakage of the working fluid blow-by through the clearance.

A publicly-known arrangement developed to solve the foregoing problems with the sealing mechanism includes a sealing ring including segments that are fitted to each other, one segment having a protruding flange face and the other segment having a recessed flange face. The protruding flange face is fitted into the recessed flange face so that, while allowances are given for dimensional tolerances in manufacturing, the blow-by of the working fluid as a result of the clearance in the entire abutting surface can be avoided (see, for example, JP-2008-298286-A).

Another publicly-known arrangement applies the same mechanism as in JP-2008-298286-A to a radial direction of the sealing ring abutting surface (see, for example, JP-2012-92829-A).

Still another publicly-known arrangement is applied to a different location as a sealing mechanism of a casing joint surface. The arrangement includes a plate-shaped key inserted in a keyway provided in the joint surface, thereby avoiding the blow-by of the working fluid (see, for example, JP-2003-262102-A).

### SUMMARY OF THE INVENTION

The use of the techniques disclosed in US-A-5971400, JP-2008-298286-A or JP-2012-92829-A allows the blow-by of the working fluid to be avoided. The fitting portion provided by the arrangements, however, produces a likelihood that the adjacent segments will stick to each other. The sticking occurs when the clearance between the protrusion and the recess formed in the abutting surfaces is excessively narrow or when impurities, such as scale originating in an upstream mechanism, are deposited in the clearance. The sticking of the segments prevents a seal fin from escaping to the outside in a radial direction when the seal fin contacts the rotor. The foregoing situation increases a likelihood that the seal fin will be unnecessarily damaged and the rotor will vibrate.

The use of the technique disclosed in JP-2003-262102-A causes the plate-shaped key inserted in the keyway in the joint surface to invariably produce an overlap extending in an axial direction at the joint portion, so that the blow-by of the working fluid can be avoided. The very overlap, however, produces a strong contact frictional force in the overlap, and consequently a likelihood that the segments will stick to each other increases.

The present invention has been made in view of the foregoing situation and it is an object of the present invention to provide a sealing mechanism that, while preventing a clearance that passes in an axial direction through an entire abutting surface without involving large resistance and that invites blow-by of a working fluid, can prevent adjacent seal segments from sticking to each other, and a method for manufacturing the sealing mechanism.

To solve the foregoing problems, the present invention incorporates arrangements as defined in the appended claims. This application includes a plurality of methods for solving the foregoing problems. In one aspect, a sealing device includes: an annular sealing ring that includes a plurality of seal segments annularly juxtaposed; a plurality of seal fins provided in an axial direction on an inner peripheral surface of the sealing ring; a joint surface on a circumferential end of the seal segment, the joint surface facing a joint surface on an adjacent seal segment; a groove formed to extend in a radial direction in the joint surface; and a protrusion formed by bending part of a surface that constitutes a long side of the groove toward an outside of the joint surface.

### Effects of the Invention

The aspect of the present invention can avoid the blow-by of the working fluid without increasing the risk of sticking between the adjacent seal segments. This benefit can reduce unnecessary leakage of the working fluid at the seal segment joint surface without a problem arising from the sticking of the seal segments. As a result, the efficiency in turbine plants can be improved.

### BRIEF DESCRIPTION OF THE DRAWINGS

The present invention will be described hereinafter with reference to the accompanying drawings.
Fig. 1 is a schematic diagram of stages of a steam turbine that includes a sealing device, a rotating machine, and a method for manufacturing a sealing device according to a first embodiment of the present invention;
Fig. 2 is a schematic view of a sealing ring in the sealing device, the rotating machine, and the method for manufacturing a sealing device according to the first embodiment of the present invention, the sealing ring seen from a rotating axis direction of a rotor;
Fig. 3 is a perspective view of the sealing ring in the sealing device, the rotating machine, and the method for manufacturing a sealing device according to the first embodiment of the present invention;
Fig. 4 is a perspective view of parts near a joint of the sealing ring in the sealing device, the rotating machine, and the method for manufacturing a sealing device according to the first embodiment of the present invention, the parts seen from a ring inner periphery;
Fig. 5 is a partial sectional perspective view, taken along the plane V-V in Fig. 4, of the sealing device, the rotating machine, and the method for manufacturing a sealing device according to the first embodiment of the present invention, the sealing device seen from an obliquely upward direction;
Fig. 6 is a schematic view illustrating a relation between an exemplary sectional shape and a flow through a clearance, the view, taken along the plane V-V in Fig. 4, regarding the sealing device, the rotating machine, and the method for manufacturing a sealing device according to the first embodiment of the present invention, the sealing device seen in the direction perpendicular to the cutting plane;
Fig. 7 is a schematic view of another exemplary sectional shape, the section, taken along the plane V-V in Fig. 4, regarding the sealing device, the rotating machine, and the method for manufacturing a sealing device according to the first embodiment of the present invention, the sealing device seen in the direction perpendicular to the cutting plane;
Fig. 8 is a schematic view illustrating a relation between still another exemplary sectional shape and the flow through the clearance, the view, taken along the plane V-V in Fig. 4, regarding the sealing device, the rotating machine, and the method for manufacturing a sealing device according to the first embodiment of the present invention, the sealing device seen in the direction perpendicular to the cutting plane;
Fig. 9A is a schematic view for illustrating a first step in an exemplary method for machining a groove in the sealing device, the rotating machine, and the method for manufacturing a sealing device according to the first embodiment of the present invention;
Fig. 9B is a schematic view for illustrating a second step in the exemplary method for machining the groove in the sealing device, the rotating machine, and the method for manufacturing a sealing device according to the first embodiment of the present invention;
Fig. 9C is a schematic view for illustrating a third step in the exemplary method for machining the groove in the sealing device, the rotating machine, and the method for manufacturing a sealing device according to the first embodiment of the present invention;
Fig. 10 is a schematic view for illustrating another exemplary method for machining a groove in the sealing device, the rotating machine, and the method for manufacturing a sealing device according to the first embodiment of the present invention; and
Fig. 11 is a schematic view illustrating a relation between an exemplary sectional shape and adjacent seal segments that face each other, the view, taken along the plane V-V in Fig. 4, regarding a sealing device, a rotating machine, and a method for manufacturing a sealing device according to a second embodiment of the present invention, the sealing device seen in the direction perpendicular to the cutting plane.

### DETAILED DESCRIPTION OF THE EMBODIMENTS

The following describes, with reference to the accompanying drawings, a sealing device, a rotating machine, and a method for manufacturing a sealing device according to embodiments of the present invention.

### First Embodiment

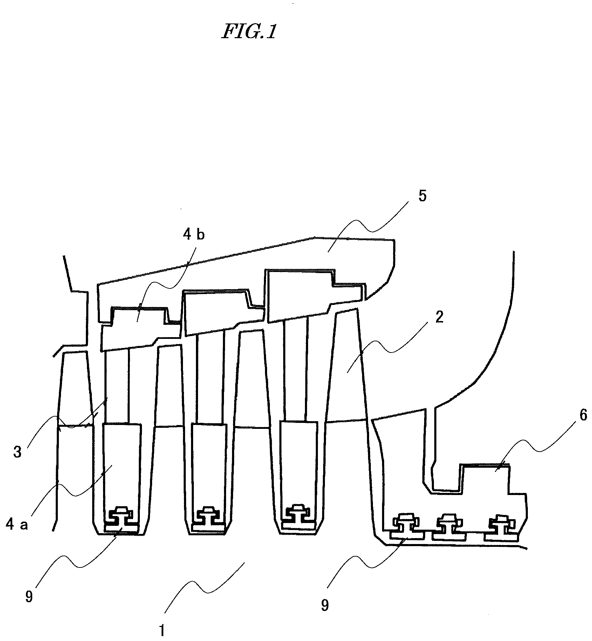

Fig. 1 is a schematic diagram of stages of a steam turbine that includes a sealing device, a rotating machine, and a method for manufacturing a sealing device according to a first embodiment of the present invention.

As illustrated in Fig. 1, each stages of a steam turbine include a combination of a moving blade 2 connected to a rotor 1, and a stationary blade 3 disposed between a diaphragm outer race 4b and a diaphragm inner race 4a. The steam turbine includes the stages in an axial direction of the rotor 1 and thus structures turbine stages. The turbine stages, enclosed in a single or multiple casing, achieve the air tightness of the turbine. In the first embodiment, the steam turbine includes an inner casing 5 and an outer casing (not shown).

In order to rotate the rotor 1 efficiently using steam that flows through the inside of the inner casing 5, the steam turbine configured as described above is required to improve sealing performance between the rotor 1 and the moving blade 2 that constitute a rotating unit, and the stationary blade 3 that is a stationary unit, to thereby diminish an amount of a working fluid (steam) that leaks from a clearance between the rotating unit and the stationary unit. To this end, the steam turbine includes a sealing device 9 such as a labyrinth seal.

In the first embodiment, as illustrated in Fig. 1, the sealing devices 9 are disposed on an inner periphery of the diaphragm inner race 4a at each stage and on an inner periphery of a seal holder 6 disposed to face a shaft end portion of the rotor 1. The sealing devices 9 disposed around the rotor 1, which is the rotating unit, each include an annular sealing ring 10 that includes a plurality of seal segments annularly juxtaposed. It is noted that, in the descriptions that follow to describe the first embodiment, directional expressions, including an axial direction, a radial direction, and a circumferential direction of the sealing device 9, refer to the same as those of the rotor 1 functioning as the rotating unit.

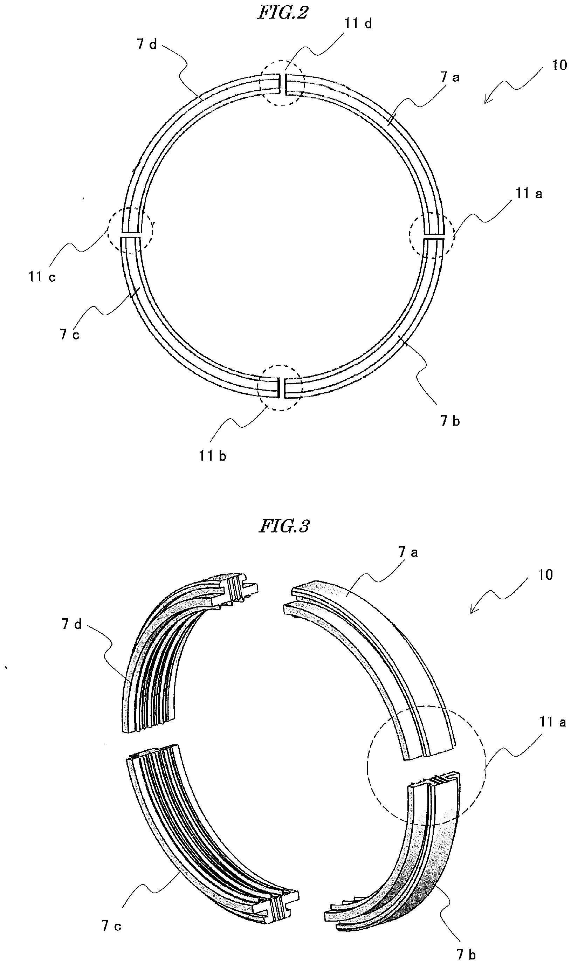

Fig. 2 is a schematic view of a sealing ring in the sealing device, the rotating machine, and the method for manufacturing a sealing device according to the first embodiment of the present invention, the sealing ring seen from a rotating axis direction of a rotor. Fig. 3 is a perspective view of the sealing ring in the sealing device, the rotating machine, and the method for manufacturing a sealing device according to the first embodiment of the present invention. As illustrated in Figs. 2 and 3, the sealing ring 10 as the sealing device 9 includes four divided annular seal segments 7a, 7b, 7c, and 7d. These seal segments 7a, 7b, 7c, and 7d are annularly juxtaposed via four joint portions 11a to 11d to constitute the annular sealing ring 10.

The seal segments 7a, 7b, 7c, and 7d each have irregularities on the axial side surfaces of the segments. The irregularities are fitted into the diaphragm inner race 4a or the seal holder 6, thereby allowing the sealing ring 10 to be retained in its position. The seal segments 7a, 7b, 7c, and 7d each have a smooth flat surface on their circumferential end portion. Bringing the circumferential end portions of the seal segments 7a, 7b, 7c, and 7d, facing each other at the respective joint portions 11a to 11d, into abutment with each other forms the annular sealing ring 10.

As described previously in Description of Related Art, the use of the sealing devices with a working fluid at high temperature requires that the sealing ring be machined to a dimension that incorporates an amount of thermal distortion during their operation. It is, however, extremely difficult to accurately estimate a thermal distribution during the operation and to manufacture the sealing ring conforming to the dimension obtained from the estimated value. Thus in general, design requirements allow for dimensional tolerances to some degree. For example in Fig. 2, a clearance may be present on the abutting surfaces between the circumferential ends that face each other of the seal segment 7a and the seal segment 7b. It is conceivable that the leakage through this clearance contributes to energy loss.

As illustrated in Fig. 1, it is noteworthy that the sealing devices 9 are disposed in multiple stages at the shaft end portion of the rotor 1 to achieve gradual reduction in pressure, so that a large pressure difference from the outside can be eliminated for reduction in the leakage. In the sealing devices 9 disposed in multiple stages, however, each of the seal segments of the sealing rings 10 have mostly aligned joint portions. Should a flow through the clearance occur on the flat abutting surfaces of the seal segments, blow-by may therefore occur across the stages of the sealing devices 9. As a result, a possible large pressure (or a pressure ratio) difference across both ends of the stages is likely to cause the leakage to increase more than anticipated. Additionally, if the large pressure (or pressure ratio) difference subjects the working fluid to adiabatic expansion, or the static temperature of the fluid drops, local distortion of the sealing device 9 by heat is promoted, so that the leakage may increase even further.

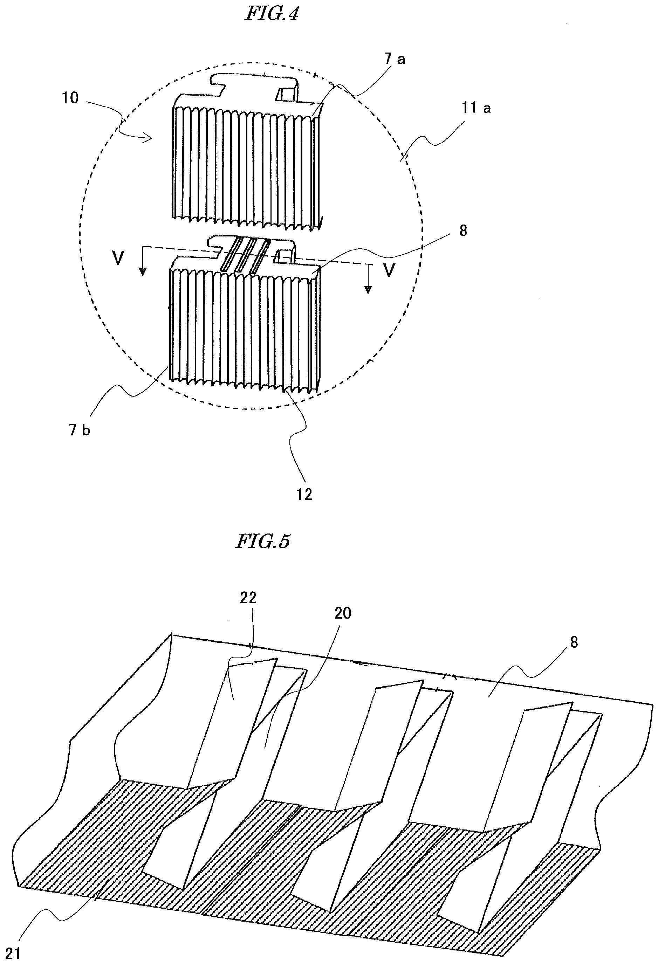

The sealing device, the rotating machine, and the method for manufacturing a sealing device according to the first embodiment of the present invention is directed to solving such problems. Specifically, grooves of a particular structure are formed in the abutting surfaces on the circumferential ends of the seal segments that constitute the sealing ring 10. The following describes, with reference to Figs. 4 to 8, the grooves.

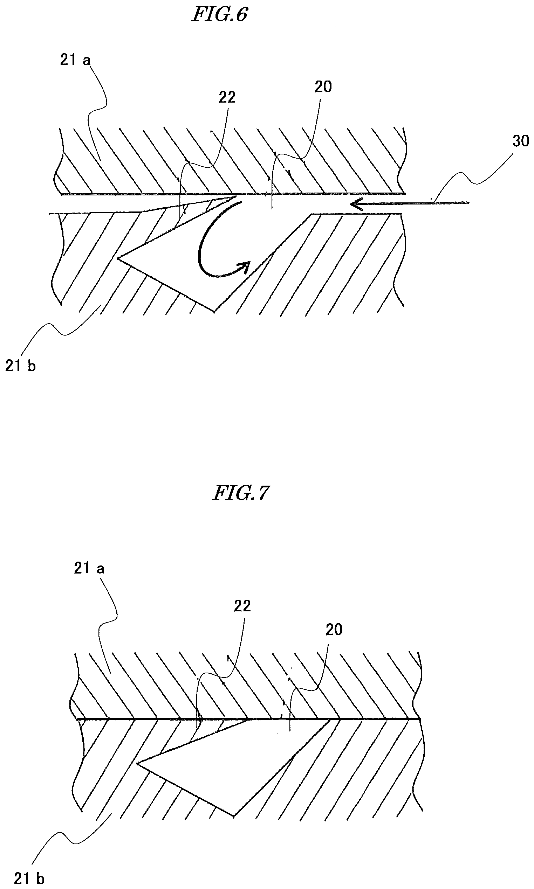

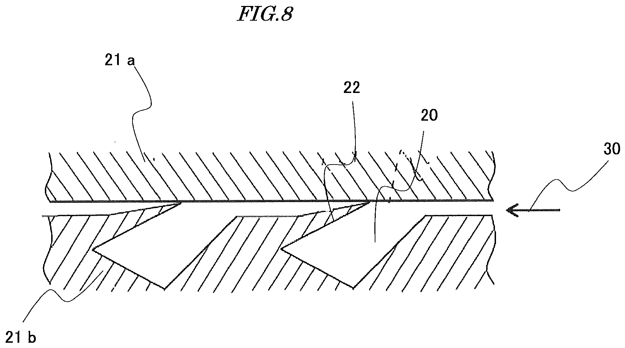

Fig. 4 is a perspective view of parts near a joint of the sealing ring in the sealing device, the rotating machine, and the method for manufacturing a sealing device according to the first embodiment of the present invention, the parts seen from a ring inner periphery. Fig. 5 is a partial sectional perspective view, taken along the plane V-V in Fig. 4, of the sealing device, the rotating machine, and the method for manufacturing a sealing device according to the first embodiment of the present invention, the sealing device seen from an obliquely upward direction. Fig. 6 is a schematic view illustrating a relation between an exemplary sectional shape and a flow through a clearance, the view, taken along the plane V-V in Fig. 4, regarding the sealing device, the rotating machine, and the method for manufacturing a sealing device according to the first embodiment of the present invention, the sealing device seen in the direction perpendicular to the cutting plane. Fig. 7 is a schematic view of another exemplary sectional shape, the section, taken along the plane V-V in Fig. 4, regarding the sealing device, the rotating machine, and the method for manufacturing a sealing device according to the first embodiment of the present invention, the sealing device seen in the direction perpendicular to the cutting plane. Fig. 8 is a schematic view illustrating a relation between still another exemplary sectional shape and the flow through the clearance, the view, taken along the plane V-V in Fig. 4, regarding the sealing device, the rotating machine, and the method for manufacturing a sealing device according to the first embodiment of the present invention, the sealing device seen in the direction perpendicular to the cutting plane. In Figs. 4 to 8, like parts are identified by the same reference numerals as in Figs. 1 to 3 and their descriptions will be omitted.

As illustrated in Fig. 4, the seal segments 7a and 7b have inner peripheral surfaces on which a plurality of seal fins 12 are provided. The seal fins 12 protrude in the radial direction and extend in the rotating axis direction of the rotor. A relatively wide space is formed in the radial direction between adjacent seal fins 12. The seal fins 12 and the spaces between the adjacent seal fins 12 together function as the sealing device 9.

In the sealing ring 10 in the first embodiment, at least one of the seal segments 7a and 7b that face each other has a plurality of grooves extending in the radial direction. Part of the surface that constitutes the long side of the groove is bent toward the outside of the corresponding joint surface.

As illustrated in Fig. 5, a groove 20 in a cut section 21 of the plane V-V in Fig. 4 is not formed into a hole that is cut squarely into a joint surface 8 of the seal segment 7b. Instead, the groove 20 is formed into a hole that is cut obliquely with respect to the joint surface 8 toward a depth. Additionally, a surface that constitutes part of the groove 20 has one end forming a protrusion 22 that protrudes to the outside. Figs. 3 to 5 illustrate three grooves 20 formed in the seal segment 7b. Alternatively, the seal segment 7b may have any other number of grooves 20. Furthermore, the grooves extending axially or circumferentially do not necessarily have to be as long or deep as exactly illustrated.

The following describes, with reference to Figs. 6 to 8, situations during turbine's operation. Fig. 6 is a view of a basic structure of the first embodiment, particularly showing a situation in which a clearance is present between adjacent seal segments. Fig. 8 shows a relation between adjacent grooves under the same situation as in Fig. 6.

In Figs. 6 and 8, the arrow indicates a direction of a leaking working fluid flow 30. It is noted that the groove 20 has a sectional shape that is cut obliquely from an upstream toward a downstream of the leaking working fluid flow 30. While Figs. 6 and 8 show that the joint surface 8 of the seal segment of a section 21a is spaced apart from the joint surface 8 of the seal segment of a section 21b, one surface that constitutes part of the groove 20 has one end forming the protrusion 22 that is bent to the outside. Thus, fluid blow-by, in which the leaking working fluid flow 30 flows through with no considerable resistance, will not develop, even if a slight clearance is present between the adjacent seal segments. Even if a clearance that is so wide as not to be blocked by the protrusion 22 is produced, the protrusion 22 and the groove 20 still have a labyrinth seal function as indicated by the arrow in Fig. 6, so that the leakage can be reduced.

Fig. 7 is a sectional schematic view illustrating a similar situation to the situation in Fig. 6, particularly showing a situation in which no clearance is present between the adjacent seal segments. Under this situation, the protrusion 22 is pressed by the joint surface 8 that faces the protrusion 22, so that a similar effect as when the protrusion 22 is absent can be achieved. The protrusion 22 does not, therefore, provide a cause for a faulty condition. The construction of the first embodiment thus causes the protrusion 22 to operate in a spring-like fashion to thereby follow, to some degree, the facing surface, allowing the sealing ring to exhibit an original function thereof, regardless of whether a clearance is present on the joint surface 8.

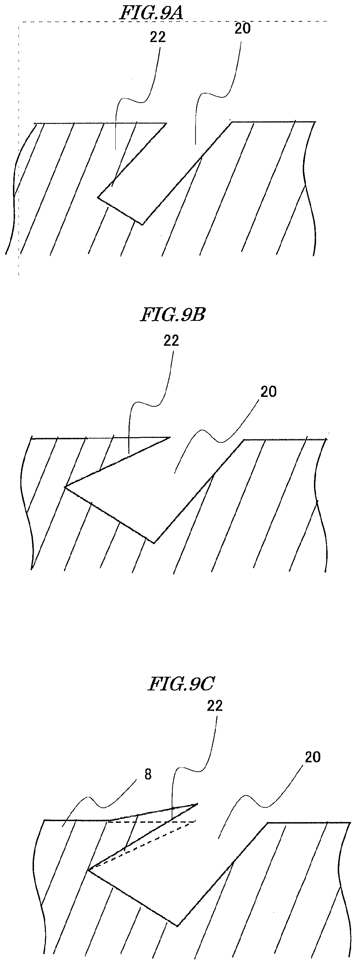

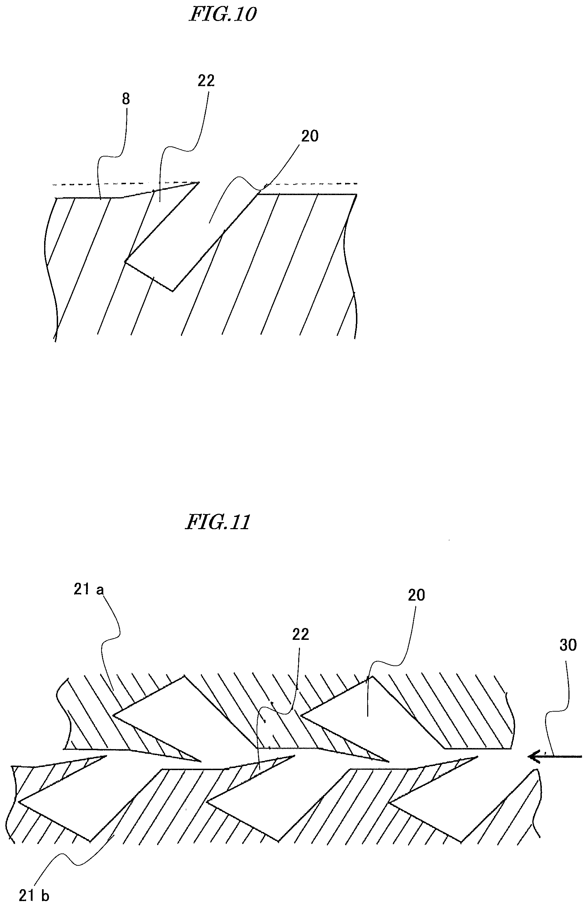

The following describes, with reference to Figs. 9A to 10, a method for manufacturing a sealing device. Fig. 9A is a schematic view for illustrating a first step in an exemplary method for machining a groove in the sealing device, the rotating machine, and the method for manufacturing a sealing device according to the first embodiment of the present invention. Fig. 9B is a schematic view for illustrating a second step in the exemplary method for machining the groove in the sealing device, the rotating machine, and the method for manufacturing a sealing device according to the first embodiment of the present invention. Fig. 9C is a schematic view for illustrating a third step in the exemplary method for machining the groove in the sealing device, the rotating machine, and the method for manufacturing a sealing device according to the first embodiment of the present invention. Fig. 10 is a schematic view for illustrating another exemplary method for machining a groove in the sealing device, the rotating machine, and the method for manufacturing a sealing device according to the first embodiment of the present invention. In Figs. 9A to 10, like parts are identified by the same reference numerals as in Figs. 1 to 8 and descriptions therefor will be omitted.

Fig. 9A is a sectional view of the joint surface of the seal segment, the view being taken along the plane V-V in Fig. 4. In the first step of the method for machining the groove 20, the groove 20 is cut in a direction inclined from the upstream toward the downstream of the working fluid and such that two surfaces that constitute the groove and that are formed on the long sides of the groove extend substantially in parallel with each other.

In the second step illustrated in Fig. 9B of the method for machining the groove 20, the surface, shown in Fig. 9A, that has a triangular cross-section inside the groove 20 is further cut to form the protrusion 22. The further cut in the second step is to allow part of the surface that constitutes the long side of the groove 20 to be thin enough to be flexible with respect to a bending operation.

In the third step illustrated in Fig. 9C of the method for machining the groove 20, the surface, shown in Fig. 9B, of the triangular cross-section is bent outwardly, such as from the dotted line to the solid line, to incline the protrusion 22 toward the outside with respect to the joint surface 8. Through the foregoing steps of from the first step to the third step, the sealing device 9 is formed into the structure according to the first embodiment.

Fig. 10 illustrates another exemplary method for machining the groove 20. This method replaces the third step of the method for machining the groove 20 described immediately above. Specifically, following the step of Fig. 9A or Fig. 9B in which the groove 20 is formed so that part of the surface that constitutes the long side of the groove has a substantially triangular cross-sectional shape, the surface of the joint surface 8 is machined from the original shape indicated by the dotted line in Fig. 10 to the shape indicated by the solid line in Fig. 10. The protrusion 22 is thereby formed into a shape that is bent to the outside with respect to the joint surface 8.

In the sealing device, the rotating machine, and the method for manufacturing a sealing device according to the first embodiment of the present invention described above, the blow-by of the working fluid can be avoided without allowing the risk of sticking between the adjacent seal segments to increase. This benefit can reduce unnecessary leakage of the working fluid at the seal segment joint surface without allowing a problem arising from the sticking of the seal segments to occur. As a result, turbine plant efficiency can be improved.

The sealing device, the rotating machine, and the method for manufacturing a sealing device according to the first embodiment of the present invention has been exemplarily described for a steam turbine that includes four-segment sealing rings. This is, however, not the only possible arrangement and the sealing ring may include any other number of segments. Additionally, the present invention is applicable to any other type of rotating machine, such as a gas turbine, in addition to the steam turbine.

### Second Embodiment

The following describes, with reference to the relevant accompanying drawing, a sealing device, a rotating machine, and a method for manufacturing a sealing device according to a second embodiment of the present invention. Fig. 11 is a schematic view illustrating a relation between an exemplary sectional shape and adjacent seal segments that face each other, the view, taken along the plane V-V in Fig. 4, regarding a sealing device, a rotating machine, and a method for manufacturing a sealing device according to a second embodiment of the present invention, the sealing device seen in the direction perpendicular to the cutting plane. In Fig. 11, like parts are identified by the same reference numerals as in Figs. 1 to 10 and descriptions therefor will be omitted.

Fig. 11 particularly shows a situation in which a joint surface 8 of a seal segment having a section 21a is spaced apart from a joint surface 8 of a seal segment having a section 21b to thereby produce a clearance between the joint surfaces 8. The first embodiment described previously has been described for a case in which the groove structure of the present invention is applied to one of the joint surfaces 8 of the two seal segments that face each other. In the second embodiment, the groove structure of the present invention is formed in both of the two joint surfaces 8. It is here noted that protrusions 22 in a first seal segment are formed at positions where the protrusions 22 face flat portions of the joint surface 8 on a second seal segment. This arrangement not only improves the labyrinth seal function, but also reduces a likelihood that the protrusion 22 on the first seal segment will interfere with the protrusion 22 on the second seal segment, resulting in a fault such as sticking.

The sealing device, the rotating machine, and the method for manufacturing a sealing device according to the second embodiment of the present invention described above can achieve the same effects as those achieved by the first embodiment.

It should be noted that the present invention is not limited to the above-described first and second embodiments and may include various modifications. The entire detailed arrangement of the embodiments described above for ease of understanding of the present invention is not always necessary to embody the present invention.

### Description of Reference Numerals

1: Rotor
2: Moving blade
3: Stationary blade
4a: Diaphragm inner race
4b: Diaphragm outer race
5: Inner casing
6: Seal holder
7a, 7b, 7c, 7d: Seal segment
8: Joint surface on a circumferential end of a segment
9: Sealing device
10: Sealing ring
12: Seal fin
20: Groove
21a, 21b: Sealing ring cross-section (taken along the plane V-V)
22: Protrusion formed by a bending operation (the protrusion is part of a wall surface constituting a groove)
30: Arrow schematically illustrating a flow through a clearance

## Claims

1. A sealing device (9) comprising:
an annular sealing ring (10) that includes a plurality of seal segments annularly juxtaposed;
a plurality of seal fins (12) provided in an axial direction in an inner peripheral surface of the sealing ring;
a joint surface (8) on a circumferential end of one of the seal segments, the joint surface (8) facing a joint surface (8) on an adjacent seal segment;
**characterised in that** said sealing device further comprises
at least one groove (20) that extends in a radial direction in the joint surface (8); and
at least one protrusion (22) formed by bending part of a surface that constitutes a long side of the at least one groove toward an outside of the joint surface (8).

2. The sealing device (9) according to claim 1, wherein the at least one groove (20) extending in the radial direction in the joint surface (8) is cut in a direction inclined from an upstream toward a downstream in a flow of a working fluid when a cross-section of the groove (20) is viewed from a direction perpendicular to an axis.

3. The sealing device (9) according to claim 1 or 2, wherein the at least one groove (20) extending in the radial direction in the joint surface (8) is formed in the axial direction.

4. The sealing device (9) according to at least one of claims 1 to 3, wherein
the at least one groove (20) extending in the radial direction in the joint surface (8) is provided in both ends of adjacent seal segments,
the at least one protrusion (22) comprises a plurality of protrusions provided at opposing seal segments, and
the protrusions formed on first and second seal segments respectively face flat portions of joint surfaces (8) of the second and first seal segments, the protrusions and the flat faces alternately disposed.

5. A rotating machine comprising:
the sealing device (9) according to at least one of claims 1 to 4, disposed between a rotating shaft and a stationary unit.

6. A method for manufacturing a sealing device (9), the sealing device (9) comprising:
an annular sealing ring (10) that includes a plurality of seal segments annularly juxtaposed;
a plurality of seal fins provided in an axial direction on an inner peripheral surface of the sealing ring;
a joint surface (8) on a circumferential end of the seal segment, the joint surface (8) facing a joint surface on an adjacent seal segment;
at least one groove (20) that extends in a radial direction in the joint surface (8), the groove being cut in a direction inclined from an upstream toward a downstream in a flow of a working fluid when a cross-section of the groove (20) is viewed from a direction perpendicular to an axis; and
a protrusion formed by bending part of a surface that constitutes a long side of the groove (20) toward an outside of the joint surface, the method comprising:
cutting the groove (20) in a direction inclined from the upstream toward the downstream in the flow of the working fluid when the cross-section of the groove (20) is viewed from the direction perpendicular to the axis.

7. The method for manufacturing a sealing device (9) according to claim 6, the method further comprising:
cutting the groove (20) so as to allow the part of the surface (8) that constitutes the long side of the groove (20) to be thin enough to be flexible with respect to a bending operation; and
bending the part of the surface that constitutes the long side of the groove toward the outside of the joint surface.

8. The method for manufacturing a sealing device (9) according to claim 6, the method further comprising:
cutting the groove (20) so that the part of the surface that constitutes the long side of the groove (20) has a substantially triangular cross-sectional shape; and
cutting a surface of the joint surface so as to form the protrusion into a shape that is bent toward an outside with respect to the joint surface.

## Patentansprüche

1. Dichtungsvorrichtung (9), die Folgendes umfasst:
einen ringförmigen Dichtungsring (10), der mehrere Dichtungselemente enthält, die ringförmig nebeneinander angeordnet sind;
mehrere Dichtungsrippen (12), die in einer axialen Richtung in einer Innenumfangsfläche des Dichtungsrings vorgesehen sind;
eine Verbindungsfläche (8) auf einem umlaufenden Ende eines der Dichtungselemente, wobei die Verbindungsfläche (8) einer Verbindungsfläche (8) auf einem benachbarten Dichtungselement zugewandt ist;
**dadurch gekennzeichnet, dass** die Dichtungsvorrichtung ferner Folgendes umfasst:
mindestens eine Rille (20), die sich in einer radialen Richtung in der Verbindungsfläche (8) erstreckt; und
mindestens einen Vorsprung (22), der durch Biegen eines Teils einer Fläche, die eine lange Seite der mindestens einen Rille bildet, zu einer Außenseite der Verbindungsfläche (8) gebildet ist.

2. Dichtungsvorrichtung (9) nach Anspruch 1, wobei die mindestens eine Rille (20), die sich in der radialen Richtung in der Verbindungsfläche (8) erstreckt, in einer Richtung geschnitten ist, die in einem Strom eines Arbeitsfluids von einer Stromaufwärtsseite zu einer Stromabwärtsseite geneigt ist, wenn ein Querschnitt der Rille (20) aus einer Richtung betrachtet wird, die zu einer Achse senkrecht ist.

3. Dichtungsvorrichtung (9) nach Anspruch 1 oder 2, wobei die mindestens eine Rille (20), die sich in der radialen Richtung in der Verbindungsfläche (8) erstreckt, in der axialen Richtung ausgebildet ist.

4. Dichtungsvorrichtung (9) nach mindestens einem der Ansprüche 1 bis 3, wobei
die mindestens eine Rille (20), die sich in der radialen Richtung in der Verbindungsfläche (8) erstreckt, in beiden Enden benachbarter Dichtungselemente vorgesehen ist,
der mindestens eine Vorsprung (22) mehrere Vorsprünge umfasst, die an gegenüberliegenden Dichtungselementen vorgesehen sind, und
die Vorsprünge, die jeweils auf einem ersten und einem zweiten Dichtungselement gebildet sind, ebenen Abschnitten der Verbindungsflächen (8) des zweiten und des ersten Dichtungselements zugewandt sind, wobei die Vorsprünge und die ebenen Flächen abwechselnd angeordnet sind.

5. Rotierende Maschine, die Folgendes umfasst:
die Dichtungsvorrichtung (9) nach mindestens einem der Ansprüche 1 bis 4, die zwischen einer rotierenden Welle und einer feststehenden Einheit angeordnet ist.

6. Verfahren zum Herstellen einer Dichtungsvorrichtung (9), wobei die Dichtungsvorrichtung (9) Folgendes umfasst:
einen ringförmigen Dichtungsring (10), der mehrere Dichtungselemente enthält, die ringförmig nebeneinandergestellt sind;
mehrere Dichtungsrippen, die in einer axialen Richtung in einer Innenumfangsfläche des Dichtungsrings vorgesehen sind;
eine Verbindungsfläche (8) auf einem umlaufenden Ende des Dichtungselements, wobei die Verbindungsfläche (8) einer Verbindungsfläche auf einem benachbarten Dichtungselement zugewandt ist;
mindestens eine Rille (20), die sich in einer radialen Richtung in der Verbindungsfläche (8) erstreckt, wobei die Rille in einer Richtung geschnitten ist, die in einem Strom eines Arbeitsfluids von einer Stromaufwärtsseite zu einer Stromabwärtsseite geneigt ist, wenn ein Querschnitt der Rille (20) aus einer Richtung betrachtet wird, die zu einer Achse senkrecht ist; und
einen Vorsprung, der durch Biegen eines Teils einer Fläche, die eine lange Seite der Rille (20) bildet, zu einer Außenseite der Verbindungsfläche gebildet ist,
wobei das Verfahren Folgendes umfasst:
Schneiden der Rille (20) in einer Richtung, die im Strom des Arbeitsfluids von der Stromaufwärtsseite zur Stromabwärtsseite geneigt ist, wenn der Querschnitt der Rille (20) aus der Richtung betrachtet wird, die zu der Achse senkrecht ist.

7. Verfahren zum Herstellen einer Dichtungsvorrichtung (9) nach Anspruch 6, wobei das Verfahren ferner Folgendes umfasst:
Schneiden der Rille (20), um zu ermöglichen, dass der Teil der Fläche (8), die die lange Seite der Rille (20) bildet, dünn genug ist, um in Bezug auf einen Biegevorgang biegsam zu sein; und
Biegen des Teils der Fläche, die die lange Seite der Rille bildet, zur Außenseite der Verbindungsfläche.

8. Verfahren zum Herstellen einer Dichtungsvorrichtung (9) nach Anspruch 6, wobei der Verfahren ferner Folgendes umfasst:
Schneiden der Rille (20), derart, dass der Teil der Fläche, die die lange Seite der Rille (20) bildet, eine im Wesentlichen dreieckige Querschnittsform aufweist; und
Schneiden einer Fläche der Verbindungsfläche, um den Vorsprung in eine Form auszubilden, die in Bezug auf die Verbindungsfläche zu einer Außenseite gebogen ist.

## Revendications

1. Dispositif d'étanchéité (9) comprenant :
une bague d'étanchéité annulaire (10) qui inclut une pluralité de segments de joint juxtaposés de façon annulaire ;
une pluralité d'ailettes de joint (12) prévues dans une direction axiale dans une surface périphérique intérieure de la bague d'étanchéité ;
une surface de jonction (8) sur une extrémité circonférentielle de l'un des segments de joint, la surface de jonction (8) faisant face à une surface de jonction (8) sur un segment de joint adjacent ;
**caractérisé en ce que** ledit dispositif d'étanchéité comprend en outre :
au moins une rainure (20) qui s'étend dans une direction radiale dans la surface de jonction (8) ; et
au moins une projection (22) formée en cintrant une partie d'une surface qui constitue un grand côté de ladite au moins une rainure vers un extérieur de la surface de jonction (8).

2. Dispositif d'étanchéité (9) selon la revendication 1, dans lequel ladite au moins une rainure (20) s'étendant dans la direction radiale de la surface de jonction (8) est taillée dans une direction inclinée depuis un côté amont vers un côté aval dans le sens d'écoulement d'un fluide de travail lorsqu'une section transversale de la rainure (20) est vue depuis une direction perpendiculaire à un axe.

3. Dispositif d'étanchéité (9) selon la revendication 1 ou 2, dans lequel ladite au moins une rainure (20) s'étendant dans la direction radiale dans la surface de jonction (8) est formée dans la direction axiale.

4. Dispositif d'étanchéité (9) selon l'une au moins des revendications 1 à 3, dans lequel
ladite au moins une rainure (20) s'étendant dans la direction radiale dans la surface de jonction (8) est prévue dans les deux extrémités de segments de joint adjacents,
ladite au moins une projection (22) comprend une pluralité de projections prévues sur des segments de joint opposés, et
les projections formées sur un premier et sur un second segment de joint font respectivement face vers des portions planes des surfaces de jonction (8) du second et du premier segment de joint, les projections et les surfaces planes étant disposées de façon alternée.

5. Machine rotative comprenant :
le dispositif d'étanchéité (9) selon l'une au moins des revendications 1 à 4, disposé entre un arbre rotatif et une unité stationnaire.

6. Procédé pour fabriquer un dispositif d'étanchéité (9), le dispositif d'étanchéité (9) comprenant :
une bague d'étanchéité annulaire (10) qui inclut une pluralité de segments de joint juxtaposés de façon annulaire ;
une pluralité d'ailettes de joint prévues dans une direction axiale sur une surface périphérique intérieure de la bague d'étanchéité ;
une surface de jonction (8) sur une extrémité circonférentielle du segment de joint, la surface de jonction (8) faisant face vers une surface de jonction sur un segment de joint adjacent ;
au moins une rainure (20) qui s'étend dans une direction radiale dans la surface de jonction (8), la rainure étant taillée dans une direction inclinée depuis un côté amont vers un côté aval dans un sens d'écoulement d'un fluide de travail quand une section transversale de la rainure (20) est vue depuis une direction perpendiculaire à un axe ; et
une projection formée en cintrant une partie d'une surface qui constitue un grand côté de la rainure (20) vers un extérieur de la surface de jonction, le procédé comprenant :
l'opération consistant à tailler la rainure (20) dans une direction inclinée depuis le côté amont vers le côté aval dans le sens d'écoulement du fluide de travail lorsque la section transversale de la rainure (20) est vue depuis la direction perpendiculaire à l'axe.

7. Procédé pour fabriquer un dispositif d'étanchéité (9) selon la revendication 6, le procédé comprenant en outre les étapes consistant à :
tailler la rainure (20) de manière à permettre à la partie de la surface (8) qui constitue le grand côté de la rainure (20) d'être suffisamment mince pour être flexible par rapport à une opération de cintrage ; et
cintrer la partie de la surface qui constitue le grand côté de la rainure en direction de l'extérieur de la surface de jonction.

8. Procédé pour fabriquer un dispositif d'étanchéité (9) selon la revendication 6, le procédé comprenant en outre les étapes consistant à :
tailler la rainure (20) de sorte que la partie de la surface qui constitue le grand côté de la rainure (20) présente une forme de section transversale sensiblement triangulaire ; et
tailler une surface de la surface de jonction de manière à former la projection sous une forme qui est cintrée vers un extérieur par rapport à la surface de jonction.
